# EUROPEAN PATENT SPECIFICATION

(11) **EP 1 129 316 B1**
(45) Date of publication and mention of the grant of the patent: **04.12.2002**
(21) Application number: 99950918.5
(22) Date of filing: 22.10.1999
(51) Int. Cl.: F16L 47/02, B29C 65/34

(54) **APPARATUS AND METHOD FOR JOINING DISSIMILAR MATERIALS**
VORRICHTUNG UND VERFAHREN ZUM VERBINDEN VON UNTERSCHIEDLICHEN MATERIALIEN
APPAREIL ET PROCEDE PERMETTANT DE JOINDRE DES MATERIAUX DIFFERENTS

(30) Priority: 13.11.1998 GB 9824814
(43) Date of publication of application: 05.09.2001
(73) Proprietor: Uponor Innovation AB, 513 81 Fristad (SE)
(72) Inventor: BOWMAN, Jeremy, Uponor Limited, Nr Alfreton, Derbyshire DE55 5JD (GB)
(74) Representative: Stainthorpe, Vanessa J.
(86) International application number: GB9903426
(87) International publication number: WO00029777

(56) References cited:
- WO-A-98/31759
- DE-A- 1 440 958
- DE-A- 2 201 985
- FR-A- 2 562 613
- GB-A- 2 273 679
- US-A- 3 900 360
- PATENT ABSTRACTS OF JAPAN vol. 013, no. 115 (C-578), 20 March 1989 (1989-03-20) -& JP 63 290569 A (KAWASUMI LAB INC), 28 November 1988 (1988-11-28)

## Description

This invention relates to the field of apparatus for fusion joining (or welding) chemically dissimilar polymeric materials, for example polymeric structures such as polyethylene (PE) and polypropylene (PP), and a method therefor.

It is well known to fusion join polymers from the same chemical family using methods such as hot gas welding, butt fusion welding and resistive or inductive electrofusion. These methods are suitable for joining two pipes, for example, of identical materials (e.g. high density polyethylene) or for joining physically dissimilar (but chemically substantially identical) materials such as random polypropylene and homopolymer polypropylene.

It is desirable to be able to join chemically dissimilar materials to provide a number of advantages. To date, this can only be done with the use of "compatibilisers" which are polymeric structures which act as an intermediate layer in the joining of the chemically dissimilar materials. The use of compatibilisers entails extra expense and the long-term performance of the joint is not clear.

A fitting for joining dissimilar materials described in JP6329569 comprises a body that encloses the region to be joined and two fusion zones comprising alternative sections of said dissimilar materials. An external process, such as high frequency welding is required to join the dissimilar materials.

GB2273679 A discloses a fitting for joining two chemically dissimilar plastic sheets comprising a body that encloses the region to be joined and four fusion zones. The fitting is equipped with a heating element located within the dissimilar materials. However, care is required when assembling the sheets and fitting before welding, in order to ensure that each sheet is in contact with the material with which it is compatible. If this is not the case, the fitting will not attach to the sheet.

The Applicant is not aware of any known method by which chemically dissimilar materials may be effectively joined, without the use of compatibilisers, to withstand long-term loading as is required in underground thermoplastic pressure pipes.

It is thus an object of the present invention to provide apparatus and a method for joining chemically dissimilar materials which seeks to overcome the above-mentioned disadvantages.

According to a first aspect of the invention as described in claim 1, there is provided a fitting for use in the joining of two or more chemically dissimilar materials comprising:
- a body which, in use, substantially encloses the region to be joined; and
- one or more fusion zones located, in use, adjacent the region to be joined,
the or each fusion zone comprising alternating sections of each of said chemically dissimilar materials, characterised in that said fitting comprises a heating element disposed within said alternating sections.

Preferably, each of said alternating sections comprises a helically-wound wire coated in one of said chemically dissimilar materials. Alternatively, the or each fusion zone may comprise an induction heater cage over which said alternating sections are moulded.

Each of said alternating sections can be of substantially square, rectangular or circular cross-section.

Said fitting may be integrally-formed in the end of a pipe comprising one of said chemically dissimilar materials to be joined.

Also, the or each fusion zone may comprise alternating sections of three chemically dissimilar materials.

Preferably, said body comprises one of said chemically dissimilar materials.

In a preferred form, one of said chemically dissimilar materials comprises a blend of two chemically dissimilar materials.

According to a second aspect of the invention as described in claim 8 there is provided a method for joining two or more chemically dissimilar materials comprising the steps of:
- providing a fitting as described in any of the preceding paragraphs;
- substantially enclosing the region to be joined with the fitting; and
- effecting electrofusion of the fitting with the materials to be joined.

Preferably, the method further comprises the steps of:
- providing the same number of wires as there are dissimilar materials to join;
- coating each wire with one of said dissimilar materials;
- helically winding said wires around a mandrel; and
- overmoulding the wires with one of said dissimilar materials to provide said fitting.

Alternatively, the method further comprises the steps of:
- providing the same number of wires as there are dissimilar materials to join;
- helically winding said wires around a mandrel;
- moulding a first set of sections of one of said dissimilar materials around a first set of said wires; and
- overmoulding all of the wires with the remaining one of said dissimilar materials to provide the alternating sections around the remaining one of said wires and the body of said fitting.

Alternatively, the method further comprises the steps of:
- moulding a first set of sections of one of said dissimilar materials;
- overmoulding the fitting with another one of said dissimilar materials to provide alternating sections and the body of said fitting;
- providing the same number of helically-wound wires as there are dissimilar materials to join; and
- ploughing in the helically-wound wires into the alternating sections.

In a further preferred form, the method further comprises the steps of:
- providing a number of metal rings or a metal cage ("the inductive element");
- coating alternate sections of said inductive element with one of said dissimilar materials;
- slipping said inductive element around a mandrel; and
- overmoulding said inductive element with another one of said dissimilar materials to provide said fitting.

Alternatively, the method further comprises the steps of:
- providing a number of metal rings or a metal cage ("the inductive element");
- slipping said inductive element around a mandrel;
- moulding a first set of sections of one of said dissimilar materials around said inductive element; and
- overmoulding said inductive element with another one of said dissimilar materials to provide the alternating sections and the body of said fitting.

Alternatively, the method further comprises the steps of:
- moulding a first set of sections of one of said dissimilar materials;
- overmoulding the fitting with another one of said dissimilar materials to provide alternating sections and the body of said fitting;
- providing a number of metal rings or a metal cage ("the inductive element");
- ploughing in the inductive element into the alternating sections.

Preferred embodiments of the invention will now be more particularly described, by way of example only, with reference to the accompanying drawing, in which:

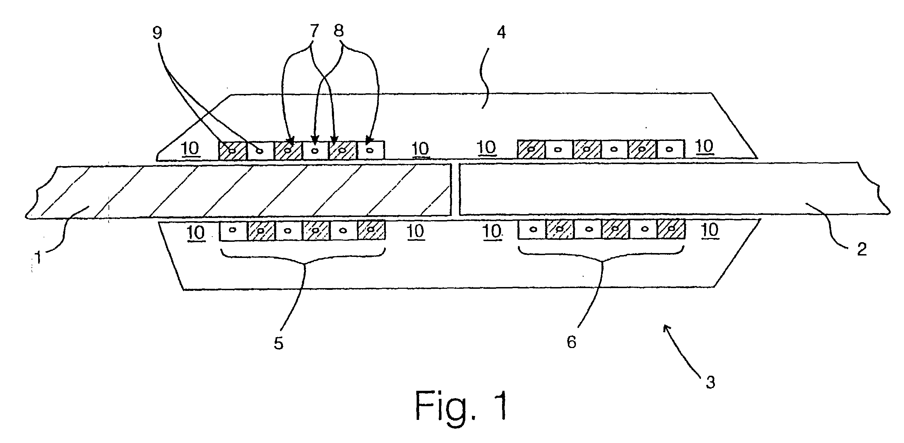

Figure 1 is a schematic cross-sectional view of two chemically dissimilar pipes which are to be joined by the apparatus and method of the present invention.

Referring to Figure 1, an example will now be described in which it is intended to join a PP pipe 1 to a PE pipe 2.

A fitting 3 is located as shown in Figure 1 so as to enclose the region of the pipes 1,2 which are to be joined. The fitting 3 comprises a PE body 4 of substantially circular outer wall cross-section, for example, which has fusion zones 5,6 located adjacent the outermost surfaces of the pipes 1,2.

The fusion zones comprise alternating sections 7, 8 which are each made up of a helically-wound wire 9 coated in either PE or PP, arranged so that the different material sections alternate as shown. It is of note that the materials selected for the alternating sections are the same as those of the chemically dissimilar pipes which are to be joined. The body 4 also comprises one of these materials (in this example, PE).

It is envisaged that one of the materials for the alternating sections 7, 8 could actually be formed from a blend of two thermoplastics polymers, for example polyethylene blended with polypropylene. In this instance, one of the helically-wound wires 9 could be coated in the blend of thermoplastics polymers to improve the fusion of the wires to the body, when fusion takes place.

In a further alternative embodiment, one of the materials for the alternating sections 7, 8 could comprise a thermoplastics polymer (for example) blended with nylon.

This would have the advantage of the nylon acting as a barrier to the ingress of fluids into the joined pipes.

Furthermore, if the material of a helically-wound wire 9 also includes nylon, the wire itself can bond to the nylon in the nylon/thermoplastics polymer blend.

At either end of each fusion zone 5,6 are provided cold zones 10 where there are no alternating sections. These zones are necessary to contain the expanding fusible material, in use, so as to maintain radial pressure on the pipes to be joined.

The fitting 3 can be produced by, firstly, coating one wire with PP and another with PE (i.e. coating the same number of wires as there are dissimilar materials to join - in this case two). Then, the wires are helically wound together around a mandrel.

The two wires are then overmoulded with PE to provide a substantially PE fitting having fusion zones 5,6 comprising alternating sections of PE and PP.

Alternatively, the fitting can be produced by using the "two-colour" moulding process to form the alternating sections of PP and PE around a single wire coil or indeed an induction heater cage. In this method, the wire is wound in its bare state around, or the cage is slipped over, the mandrel and a first mould enables moulding of the first sections of, for example, PP. Then a second mould is employed to overmould the second sections, as well as the body of the fitting, in the other material for example PE.

In a further alternative method, the fitting can be produced using the so-called "ploughing-in" technique. In this method, the two-colour moulding process is employed to form the alternating sections of PP and PE in the absence of a wire coil or induction heater cage. The wire coil or induction heater cage is then pushed or "ploughed" into the alternating sections of plastics material.

When the fitting 3 is located as shown in Figure 1 so as to enclose the region to be joined of each pipe 1,2, the electrofusion process can begin. During this process, the fusion zones 5,6 are heated by passing an electric current down the wires or by inductively energising the cage, causing the materials to melt and expand. Fusion occurs between the PP pipe 1 and the PP sections 7 of the fitting and also between the PE pipe 2 and the PE sections 8 of the fitting. The wires or cage are also bonded to the body of the fitting. Weak bonds may also occur between the PP pipe 1 and the PE sections 8 (and vice versa). In any event, a castellated interference joint is formed between the fitting and the dissimilar material pipe which is axially very strong.

An O-ring seal could additionally be provided in one or both more cold zones 10 if there was any doubt as to the integrity of the fluid seal between the dissimilar components.

The above-described apparatus and method is suitable for the joining of numerous different polymeric materials, for example PP, PE, polybutylene, polyoxymethylene (acetyl), ABS, polyketones and nylons.

It is envisaged that a fitting having fusion zones comprising more than two alternating materials may be provided. A fitting having alternating sections of three chemically dissimilar materials may be used to join sections of pipe comprising any of the three materials. Such a fitting will also reduce the number of fittings containing different materials which need to be manufactured to enable joining of commonly-desired combinations of pipes.

A further application of the present invention is the possibility of joining pipes of chemically similar material with a fitting of a chemically dissimilar material. This enables the joining of, for example, two pipes with a fitting of material having different properties (e.g. higher strength). For example two cross-linked PE pipes could be joined with a fitting made from polysulphone (a material having higher temperature resistance and better strength than the ordinary pipe material (PE)).

It will thus be appreciated that the present invention is not limited to the joining of chemically-dissimilar pipes: it may be applied more generally for the joining of chemically-dissimilar materials, for example as described above.

The joining of chemically dissimilar materials using the above-described invention has numerous advantages, for example:
1. Underground pipes need not be of the same material throughout their length, i.e. sections of different material may be inserted where it is desired to have certain properties such as high impact resistance, high stiffness or high temperature resistance. In this way sections of the pipeline can be tailored to the particular environment in which they are located. For example, as PP is inherently stronger than PE, it would be possible to insert a PP section in a PE pipe over an unsupported area such as a bridge. Alternatively, a plastic flange, which is required to have good stiffness, strength and toughness (but is made of more costly material) can be joined to pipe made from lower cost material.
2. The apparatus and method of the invention could be used to join sheets (rather than pipes) of chemically dissimilar material so that the technology could be applied to the car industry, for example. A vehicle bumper could be moulded in two halves of dissimilar material and then fusion welded together to provide a bumper with an aesthetically-pleasing top half and an impact resistant lower half, for example.
3. The apparatus and method of the invention could be used to provide power tools, for example, with an easily grippable handle material which does not peel off (as is the tendency with known rubber coated handles).
4. The technology is of particular use to enable the insertion of sections of pipe having particular desired characteristics. For example, where a pipe leads from a compressor exit (where the gas temperature is very low), conventionally a section of metal pipe is used closest to the compressor, until the gas warms up. Using the present invention, the metal section could be replaced by a relatively much cheaper polymeric section having resistance to low temperature.

## Claims

1. A fitting (3) for use in the joining of two or more chemically dissimilar materials (1, 2) comprising:
• a body (4) which, in use, substantially encloses the region to be joined; and
• one or more fusion zones (5,6) located, in use, adjacent the region to be joined,
the or each fusion zone comprising alternating sections (7,8) of each of said chemically dissimilar materials, **characterised in that** said fitting further comprises a heating element (9) disposed within said alternating sections.

2. A fitting as claimed in Claim 1 wherein each of said alternating sections (7,8) comprises a helically-wound wire (9) coated in one of said chemically dissimilar materials.

3. A fitting as claimed in Claim 1 or Claim 2 wherein each of said alternating sections is of substantially square, rectangular or circular cross-section.

4. A fitting as claimed in any of the preceding Claims wherein said fitting is integrally-formed in the end of a pipe comprising one of said chemically dissimilar materials to be joined.

5. A fitting as claimed in any of the preceding Claims wherein the or each fusion zone comprises alternating sections of three chemically dissimilar materials.

6. A fitting as claimed in any of the preceding claims wherein said body comprises one of said chemically dissimilar materials.

7. A fitting as claimed in any of the preceding claims wherein one of said chemically dissimilar materials comprises a blend of two chemically dissimilar materials.

8. A method for joining two or more chemically dissimilar materials (1,2) comprising the steps of:
• providing a fitting (3)as claimed in any of the preceding claims;
• substantially enclosing the region to be joined with the fitting; and
• effecting electrofusion of the fitting with the materials to be joined.

9. A method as claimed in Claim 8 further comprising the steps of:
• providing the same number of wires as there are dissimilar materials to join;
• coating each wire with one of said dissimilar materials;
• helically winding said wires around a mandrel; and
• overmoulding the wires with one of said dissimilar materials to provide said fitting.

10. A method as claimed in Claim 8 further comprising the steps of:
• providing the same number of wires as there are dissimilar materials to join;
• helically winding said wires around a mandrel;
• moulding a first set of sections of one of said dissimilar materials around a first of said wires; and
• overmoulding all of the wires with the remaining one of said dissimilar materials to provide the alternating sections around the remaining one of said wires and the body of said fitting.

11. A method as claimed in Claim 8 further comprising the steps of:
• moulding a first set of sections of one of said dissimilar materials;
• overmoulding the fitting with another one of said dissimilar materials to provide alternating sections and the body of said fitting;
• providing the same number of helically-wound wires as there are dissimilar materials to join; and
• ploughing in the helically-wound wires into the alternating sections.

12. A method as claimed in Claim 8 further comprising the steps of:
• providing a number of metal rings or a metal cage ("the inductive element");
• coating alternate sections of said inductive element with said dissimilar materials;
• slipping said inductive element around a mandrel; and
• overmoulding said inductive element with one of said dissimilar materials to provide said fitting.

13. A method as claimed in Claim 8 further comprising the steps of:
• providing a number of metal rings or a metal cage ("the inductive element");
• slipping said inductive element around a mandrel;
• moulding a first set of sections of one of said dissimilar materials around said inductive element; and
• overmoulding said inductive element with another one of said dissimilar materials to provide the alternating sections and the body of said fitting.

14. A method as claimed in Claim 8 further comprising the steps of:
• moulding a first set of sections of one of said dissimilar materials;
• overmoulding the fitting with another one of said dissimilar materials to provide alternating sections and the body of said fitting;
• providing a number of metal rings or a metal cage ("the inductive element");
• ploughing in the inductive element into the alternating sections.

## Patentansprüche

1. Formstück (3) zur Verwendung beim Verbinden von zwei oder mehr chemisch unterschiedlichen Materialien (1, 2), mit:
einem Körper (4), der bei der Anwendung die zu verbindende Region im wesentlichen einschließt, und
einer oder mehreren Schmelzzonen (5, 6), die bei der Anwendung angrenzend an die zu verbindende Region angeordnet sind,
wobei die oder jede Schmelzzone abwechselnde Abschnitte (7, 8) aus jedem der chemisch unterschiedlichen Materialien aufweist, **dadurch gekennzeichnet, daß** das Formstück weiter ein Heizelement (9) aufweist, das in den abwechselnden Abschnitten angeordnet ist.

2. Formstück nach Anspruch 1, wobei jeder der abwechselnden Abschnitte (7, 8) einen schraubenförmig gewundenen Draht (9) aufweist, der in einem der chemisch unterschiedlichen Materialien eingebettet ist.

3. Formstück nach Anspruch 1 oder Anspruch 2, wobei jeder der abwechselnden Abschnitte einen im wesentlichen quadratischen, rechteckigen oder kreisförmigen Querschnitt hat.

4. Formstück nach einem der vorhergehenden Ansprüche, wobei das Formstück einstückig in einem Ende eines Rohrs gebildet ist, das eines der chemisch unterschiedlichen Materialien, die zu verbinden sind, aufweist.

5. Formstück nach einem der vorhergehenden Ansprüche, wobei die oder jede Schmelzzone abwechselnde Abschnitte aus drei chemisch unterschiedlichen Materialien aufweist.

6. Formstück nach einem der vorhergehenden Ansprüche, wobei der Körper eines der chemisch unterschiedlichen Materialien aufweist.

7. Formstück nach einem der vorhergehenden Ansprüche, wobei eines der chemisch unterschiedlichen Materialien ein Gemisch aus zwei chemisch unterschiedlichen Materialien aufweist.

8. Verfahren zum Verbinden von zwei oder mehr chemisch unterschiedlichen Materialien (1, 2), bei dem
ein Formstück (3) nach einem der vorhergehenden Ansprüche bereitgestellt wird,
die zu verbindende Region mit dem Formstück im wesentlichen eingeschlossen wird, und
Elektroverschmelzung des Formstücks mit den zu verbindenden Materialien bewirkt wird.

9. Verfahren nach Anspruch 8, bei dem weiter:
so viele Drähte wie unterschiedliche zu verbindende Materialien vorhanden sind bereitgestellt werden,
jeder Draht mit einem der unterschiedlichen Materialien ummantelt wird,
die Drähte schraubenförmig um einen Dorn gewunden werden, und
die Drähte mit einem der unterschiedlichen Materialien umgossen werden, um das Formstück zu bilden.

10. Verfahren nach Anspruch 8, bei dem weiter:
so viele Drähte wie unterschiedliche zu verbindende Materialien vorhanden sind bereitgestellt werden,
die Drähte schraubenförmig um einen Dorn gewunden werden,
ein erster Satz von Abschnitten aus einem der unterschiedlichen Materialien um einen ersten der Drähte gegossen wird, und
alle Drähte mit dem verbleibenden der unterschiedlichen Materialien umgossen werden, um die abwechselnden Abschnitte um den übrigen der Drähte und den Körper des Formstücks zu bilden.

11. Verfahren nach Anspruch 10, bei dem weiter:
ein erster Satz von Abschnitten aus einem der unterschiedlichen Materialien gegossen wird,
das Formstück mit einem anderen der unterschiedlichen Materialien umgossen wird, um die abwechselnden Abschnitte und den Körper des Formstücks bereitzustellen,
so viele schraubenförmig gewundene Drähte wie unterschiedliche zu verbindende Materialien vorhanden sind bereitgestellt werden, und
die schraubenförmig gewundenen Drähte in Furchen in die abwechselnden Abschnitte eingebracht werden.

12. Verfahren nach Anspruch 8, bei dem:
eine Anzahl von Metallringen oder ein Metallkäfig ("das induktive Element") bereitgestellt wird,
abwechselnde Abschnitte des induktiven Elements mit den unterschiedlichen Materialien beschichtet werden,
das induktive Element über den Dorn geschoben wird, und
das induktive Element mit einem der unterschiedlichen Materialien umgossen wird, um das Formstück bereitzustellen.

13. Verfahren nach Anspruch 8, bei dem weiter:
eine Anzahl von Metallringen oder ein Metallkäfig ("das induktive Element") bereitgestellt wird,
das induktive Element über den Dorn geschoben wird,
ein erster Satz von Abschnitten aus einem der unterschiedlichen Materialien um das induktive Element gegossen wird,
das induktive Element mit einem anderen der unterschiedlichen Materialien umgossen wird, um die abwechselnden Abschnitte und den Körper des Formstücks zu bilden.

14. Verfahren nach Anspruch 8, bei dem weiter:
ein erster Satz von Abschnitten aus einem der unterschiedlichen Materialien gegossen wird,
das Formstück mit einem anderen der unterschiedlichen Materialien umgossen wird, um die abwechselnden Abschnitte und den Körper des Formstücks zu bilden,
eine Anzahl von Metallringen oder ein Metallkäfig ("das induktive Element") bereitgestellt wird,
das induktive Element in Furchen in den abwechselnden Abschnitten eingebracht wird.

## Revendications

1. Raccord (3) destiné à être utilisé dans la jonction de deux matières ou plus (1, 2), chimiquement différentes, comprenant :
• un corps (4), lequel, lors de l'utilisation, entoure de façon substantielle la région de la jonction ; et
• une ou plusieurs zones de fusion (5, 6) situées, lors de l'utilisation, au voisinage de la région de la jonction,
la ou chaque zone de fusion comprenant des sections alternées (7, 8) de chacune desdites matières chimiquement différentes,
**caractérisé par le fait que** ledit raccord comprend en outre un élément de chauffage (9) disposé à l'intérieur desdites sections alternées.

2. Raccord selon la revendication 1, dans lequel chacune desdites sections alternées (7, 8) comprend un fil (9) enroulé hélicoïdalement, enrobé dans l'une desdites matières chimiquement différentes.

3. Raccord selon la revendication 1 ou la revendication 2, dans lequel chacune desdites sections alternées est de section transversale sensiblement carrée, rectangulaire ou circulaire.

4. Raccord selon l'une quelconque des revendications précédentes, dans lequel ledit raccord est formé d'un seul tenant dans l'extrémité d'un tuyau comprenant l'une desdites matières chimiquement différentes devant être réunies.

5. Raccord selon l'une quelconque des revendications précédentes, dans lequel la ou chaque zone de fusion comprend des sections alternées de trois matières chimiquement différentes.

6. Raccord selon l'une quelconque des revendications précédentes, dans lequel ledit corps comprend l'une desdites matières chimiquement différentes.

7. Raccord selon l'une quelconque des revendications précédentes, dans lequel l'une desdites matières chimiquement différentes comprend un mélange de deux matières chimiquement différentes.

8. Procédé pour réunir deux matières ou plus (1, 2), chimiquement différentes, comprenant les étapes consistant à :
• prendre un raccord (3) tel que défini à l'une quelconque des revendications précédentes ;
• enfermer de façon substantielle la région de la jonction par le raccord ; et
• effectuer une électrofusion du raccord avec les matières devant être réunies.

9. Procédé selon la revendication 8, comprenant en outre les étapes consistant à :
• prendre le même nombre de fils qu'il y a de matières différentes à réunir ;
• enrober chaque fil avec l'une desdites matières différentes ;
• enrouler hélicoïdalement lesdits fils autour d'un mandrin ; et
• surmouler les fils avec l'une desdites matières différentes pour fournir ledit raccord.

10. Procédé selon la revendication 8, comprenant en outre les étapes consistant à :
• prendre le même nombre de fils qu'il y a de matières différentes à réunir ;
• enrouler hélicoïdalement lesdits fils autour d'un mandrin ;
• mouler un premier ensemble de sections de l'une desdites matières différentes autour d'un premier desdits fils ; et
• surmouler la totalité des fils avec celle restante desdites matières différentes pour fournir les sections alternées autour de celui restant desdits fils et le corps dudit raccord.

11. Procédé selon la revendication 8, comprenant en outre les étapes consistant à :
• mouler un premier ensemble de sections de l'une desdites matières différentes ;
• surmouler le raccord avec une autre desdites matières différentes pour fournir des sections alternées et le corps dudit raccord ;
• prendre le même nombre de fils enroulés hélicoïdalement qu'il y a de matières différentes à réunir ; et
• enfouir les fils enroulés hélicoïdalement dans les sections alternées.

12. Procédé selon la revendication 8, comprenant en outre les étapes consistant à :
• prendre un nombre de bagues métalliques ou une cage métallique (« l'élément inducteur ») ;
• enrober des sections alternées dudit élément inducteur avec lesdites matières différentes ;
• glisser ledit élément inducteur autour d'un mandrin ; et
• surmouler ledit élément inducteur avec l'une desdites matières différentes pour fournir ledit raccord.

13. Procédé selon la revendication 8, comprenant en outre les étapes consistant à :
• prendre un nombre de bagues métalliques ou une cage métallique (« l'élément inducteur ») ;
• glisser ledit élément inducteur autour d'un mandrin ;
• mouler un premier ensemble de sections de l'une desdites matières différentes autour dudit élément inducteur ; et
• surmouler ledit élément inducteur avec une autre desdites matières différentes pour fournir les sections alternées et le corps dudit raccord.

14. Procédé selon la revendication 8, comprenant en outre les étapes consistant à :
• mouler un premier ensemble de sections de l'une desdites matières différentes ;
• surmouler le raccord avec une autre desdites matières différentes pour fournir des sections alternées et le corps dudit raccord ;
• prendre un nombre de bagues métalliques ou une cage métallique (« l'élément inducteur ») ;
• enfouir l'élément inducteur dans les sections alternées.
